# FASCICULE DE BREVET EUROPEEN

(11) **EP 0 538 736 B1**
(45) Date de publication et mention de la délivrance du brevet: **29.11.1995**
(21) Numéro de dépôt: 92117629.3
(22) Date de dépôt: 15.10.1992
(51) Int. Cl.: B29C 59/10, B29C 59/12

(54) **Dispositif de traitement de surface par décharge couronne**
Gerät zur Oberflächenbehandlung mittels Coronaentladung
Device for surface treatment by corona discharge

(30) Priorité: 23.10.1991 FR 9113096
(43) Date de publication de la demande: 28.04.1993
(73) Titulaire: ALCATEL FIBRES OPTIQUES, F-95871 Bezons Cedex (FR)
(72) Inventeur: Brehm, Claude, F-92120 Montrouge (FR); Lerner, Pierre, F-91190 Gif Sur Yvette (FR); Brisset, Jean-Louis, F-75005 Paris (FR); Boniort, Jean-Yves, F-91470 Limours (FR); Robion, Denis, F-76000 Rouen (FR)
(74) Mandataire: Weinmiller, Jürgen

(56) Documents cités:
- FR-A- 377 877
- US-A- 3 057 792
- US-A- 3 472 756
- US-A- 3 484 363
- PATENT ABSTRACTS OF JAPAN vol. 7, no. 147 (C-173)(1292) 28 Juin 1983 & JP-A-58 058 147 (SHIMAZU SEISAKUSHO) 6 Avril 1983

## Description

La présente invention concerne un dispositif de traitement de surface par décharge couronne, et plus particulièrement un dispositif destiné au traitement de la surface externe d'un corps allongé, c'est-à-dire dont une des dimensions, que l'on appellera longueur, est très grande devant les deux autres dimensions, comme par exemple une fibre optique, un câble, un barreau de section quelconque, etc. On appelera axe longitudinal d'un tel corps une droite médiane le traversant selon sa longueur, et l'on dira que ce corps est allongé le long de son axe longitudinal.

Un dispositif de ce type, destiné au traitement de surface par plasma, l'effluve électrique étant obtenue par une décharge de type couronne, est connu par exemple d'après le brevet JP-A-58 058147.

Ce dispositif comporte une enceinte fermée munie d'une ouverture d'entrée et d'une ouverture de sortie permettant à un fil, ou tout autre corps à traiter, de la traverser de part en part. A l'intérieur de l'enceinte, on trouve:
- une première électrode, ou électrode haute tension, constituée de deux plaques reliées à un générateur de haute tension,
- une deuxième électrode, ou contre-électrode, constituée de grillages entourant le corps à traiter lorsque celui-ci défile dans l'enceinte.

La contre-électrode est située entre les plaques de l'électrode haute tension et portée à un potentiel inférieur à celui de cette dernière. Enfin, un passage d'amenée d'un gaz réactif est également ménagé dans l'enceinte.

La décharge couronne apparaît dans une zone située au voisinage de l'électrode haute tension et du corps à traiter. Elle est effectuée sous une tension continue ou alternative, et permet le greffage des espèces dites lourdes (ou actives) du plasma, c'est-à-dire les molécules, radicaux, ions ou atomes, sur la surface à traiter. Ces espèces lourdes proviennent de l'excitation électronique des molécules injectées au voisinage de l'électrode haute tension, par impact électronique avec des électrons de l'électrode haute tension libérés par effet couronne. Les espèces chargées (ions) ainsi produites dans l'espace inter-électrodes sont entraînées depuis l'électrode haute tension vers la contre-électrode sous l'effet du champ électrique, et les espèces non chargées (molécules, radicaux, atomes) sont portées dans la même direction par le vent électrique. Lors de l'impact avec le matériau constituant la surface du corps à traiter, les espèces activées réagissent en particulier avec ce matériau.

Le dispositif décrit précédemment n'est pas satisfaisant, car il ne permet pas de traiter de manière uniforme et homogène toute la surface externe du corps à traiter.

Le but de la présente invention est donc de réaliser un dispositif de traitement de surface par décharge couronne permettant le traitement homogène de corps allongés.

La présente invention propose à cet effet un dispositif de traitement de la surface d'un corps par décharge couronne comprenant :
- une enceinte de réaction fermée dans laquelle peut défiler ledit corps à traiter le long d'un axe dit de passage,
- une électrode portée à un potentiel dit de traitement,
- une contre-électrode portée à un potentiel inférieur en valeur absolue à celui de ladite électrode, ladite contre-électrode entourant ledit axe de passage et lesdites électrode et contre-électrode étant disposées de manière à définir au voisinage dudit axe de passage une zone dite plasmagène dans laquelle se produit ladite décharge couronne,
- au moins un passage ménagé dans ladite enceinte pour l'amenée d'un gaz réactif plasmagène destiné au traitement,
caractérisé en ce que ladite électrode est munie d'une pluralité de portions de faible rayon de courbure, c'est-à-dire ayant des extrémités effilées ou pointues, orientées vers ledit axe de passage et disposées de sorte que les projections de leurs extrémités de faible rayon de courbure sur un plan orthogonal audit axe de passage entourent la projection sur ledit plan du contour externe dudit corps à traiter ainsi que celle dudit axe de passage.

Ce dispositif permet ainsi de traiter de manière homogène la surface externe de corps allongés, puisque cette dernière se trouve entièrement en regard de l'électrode haute tension, soit au fur et à mesure du défilement du corps dans l'enceinte, soit lors de la présence statique de ce dernier dans l'enceinte.

Selon un mode de réalisation possible, l'électrode haute tension peut être constituée d'un empilement d'une pluralité de tores en un matériau conducteur ayant une section présentant un angle aigu orienté vers l'axe de passage de l'enceinte.

L'électrode haute tension peut également être constituée, selon un second mode de réalisation possible, d'une paroi métallique de révolution autour de l'axe de passage de l'enceinte et hérissée sur toute sa surface interne en regard de cet axe de pointes orientées vers ce dernier. La paroi de l'électrode haute tension peut ainsi être hérissée d'une pluralité de pointes situées dans un même plan orthogonal à l'axe de passage. Plus particulièrement, elle peut dans ce cas comporter quatre pointes disposées à 90° l'une de l'autre.

Ces modes de réalisation de l'électrode haute tension satisfont à la fois aux exigences requises pour la production de l'effet couronne (application d'une haute tension à une surface de faible rayon de courbure) et pour le traitement uniforme d'un corps allongé le long de l'axe de l'enceinte.

Avec les électrodes haute tension réalisées selon les modes ci-dessus, on peut utiliser une contre-électrode constituée d'un grillage cylindrique, constitué par exemple d'un film métallique perforé, interposé entre l'électrode haute tension et l'axe de passage, et relié à la masse. Grâce à cette disposition, les espèces actives ionisées par la décharge couronne sont piégées par la contre-électrode et ne participent pas au traitement de la surface alors que la contre-électrode laisse passer les espèces actives neutres.

Lorsque l'électrode haute tension comporte quatre pointes disposées à 90° l'une de l'autre, la contre-électrode présente un canal central centré sur l'axe de passage et est disposée à la suite de l'électrode haute tension le long de cet axe, en étant isolée de l'électrode haute tension au moyen d'une entretoise isolante présentant également un canal central centré sur l'axe de passage.

Selon une variante avantageuse, l'électrode haute tension peut être constituée d'une pluralité de compartiments empilés le long de l'axe de passage de l'enceinte, délimités les uns des autres par des plans orthogonaux à l'axe de passage et tels que les projections des extrémités de faible rayon de courbure des portions effilées ou pointues appartenant à un même compartiment sur un plan orthogonal à l'axe de passage entourent la projection sur ce plan du contour du corps à traiter ainsi que celle de l'axe de passage.

Dans un tel dispositif, l'enceinte comporte plusieurs passages d'amenée de réactifs, chacun de ces passages étant en relation avec l'un distinct des compartiments et amenant un gaz réactif de composition distincte, et des moyens sont prévus dans l'enceinte pour empêcher le mélange de ces différents gaz. En outre, chacun des compartiments est séparé des autres par un moyen isolant et porté à un potentiel différent.

Cette variante permet de faire subir au corps défilant selon l'axe de passage de l'enceinte différents traitements successifs, les potentiels de chacun des compartiments étant adaptés à la composition du gaz réactif qu'ils contiennent.

Dans un mode de réalisation de cette variante, l'électrode haute tension est constituée de deux compartiments séparés l'un de l'autre par une rondelle isolante, le premier de ces compartiments rencontré par le corps à traiter lors de son défilement dans l'enceinte étant en relation avec une amenée de gaz réactif plasmagène décapant sa surface, et le second compartiment étant en relation avec une amenée de gaz réactif traitant la surface du corps.

Selon une dernière variante, l'enceinte présente une ouverture dite d'entrée et une ouverture dite de sortie, ces deux ouvertures étant en relation avec le milieu extérieur à l'enceinte et permettant au corps à traiter de traverser l'enceinte. Au voisinage de chacune de ces ouvertures se trouve un passage d'amenée de gaz neutre vis-à-vis de la décharge couronne au potentiel de traitement, en surpression par rapport au gaz réactif à l'intérieur de l'enceinte.

Cette variante permet le traitement de la surface du corps à traiter sans interrompre la ligne de fabrication de ce corps.

De préférence, afin d'éviter les phénomènes de décharges préférentielles, la distance inter-électrodes est constante (on mesure la distance inter-électrodes dans un plan orthogonal à l'axe longitudinal et sur une droite passant par cet axe).

Enfin, la vitesse de défilement du corps à traiter dans l'enceinte peut être nulle.

Le dispositif selon l'invention peut être appliqué par exemple à la fluoration des gaines de fibres optiques en présence d'un gaz plasmagène fluorocarboné pur ou dilué par l'Argon.

Il peut aussi être appliqué au traitement de la surface extérieure d'un câble gainé.

D'autres caractéristiques et avantages de la présente invention apparaîtront dans la description qui suit d'un dispositif selon l'invention, donnée à titre illustratif et nullement limitatif.

Dans les figures suivantes :
- la figure 1 est une vue en élévation avec coupe partielle d'un premier dispositif selon l'invention,
- la figure 2 est une coupe selon la ligne II-II de la figure 1,
- la figure 3 est une vue en élévation avec coupe partielle d'un deuxième dispositif selon l'invention,
- la figure 4 est une coupe selon la ligne IV-IV de la figure 3,
- la figure 5 représente une vue en coupe partielle selon la ligne V-V de la figure 6 représentant une alternative possible pour l'électrode haute tension des dispositifs des figures 1 à 4,
- la figure 6 est une vue en coupe selon la ligne VI-VI de la figure 5,
- la figure 7 est une vue en élévation avec coupe partielle d'un troisième dispositif selon l'invention,
- la figure 8 est une vue de dessus de la figure 7,
- la figure 9 est une vue en élévation avec coupe partielle d'une variante du dispositif des figures 7 et 8.

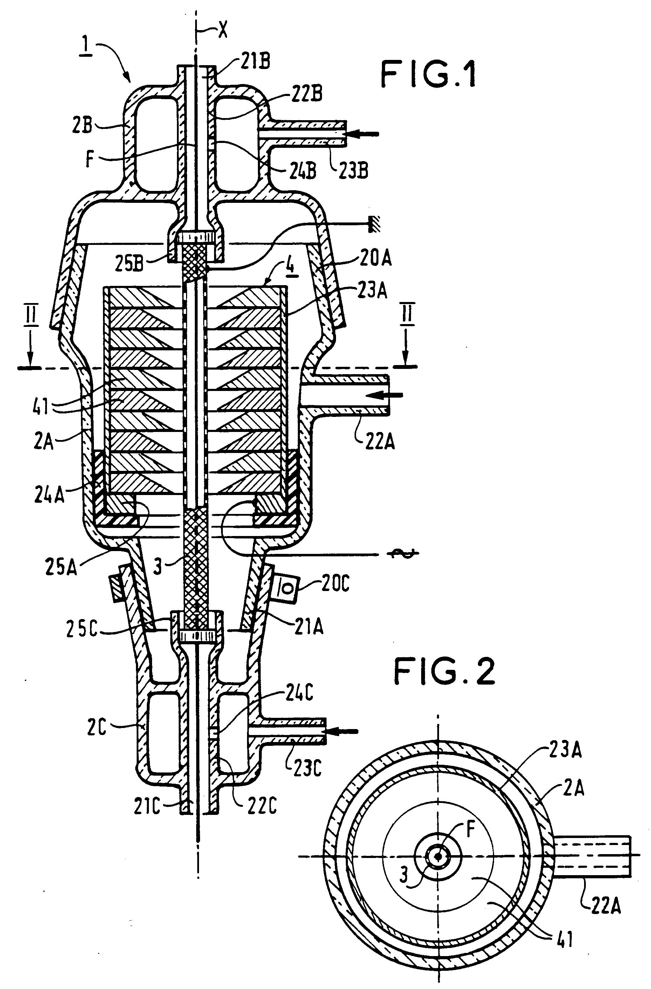

Les figures 1 et 2 représentent un premier dispositif conforme à la présente invention. Ce dispositif comprend un réacteur 1 constitué d'une enceinte en verre ou en silice à l'intérieur de laquelle se trouvent une contre-électrode 3 reliée à la masse, et une électrode haute tension 4 alimentée par exemple par un générateur de tension continue (non représenté) et portée à un potentiel dit de traitement.

L'enceinte est plus particulièrement constituée d'une partie centrale 2A et de deux parties terminales 2B et 2C enfilées sur la partie centrale 2A qui présente à cet effet deux extrémités coniques 20A et 21A coopérant avec les parties terminales 2B et 2C. La partie terminale 2B forme le couvercle de l'enceinte et la partie terminale 2C le fond de cette dernière.

La partie centrale 2A comporte un passage d'amenée 22A de gaz réactif comme par exemple un gaz oxydant pour nettoyer une surface et favoriser l'adhérence de revêtements ultérieurs, un gaz rare pour améliorer l'adhérence d'une surface, un gaz chloré pour nettoyer et deshydrater une surface, ou un gaz fluoré pour rendre une surface hydrophobe et antiadhérente. Selon le traitement souhaité, on peut utiliser le gaz réactif pur comme gaz réactif et comme gaz plasmagène. Toutefois, il est préférable de diluer ce gaz dans un gaz plasmagène non réactif, comme par exemple l'Argon, l'Azote ou tout autre gaz inerte permettant de favoriser l'apparition de la décharge couronne et d'en améliorer les effets. Bien entendu, si le gaz réactif et le gaz plasmagène sont différents, ils peuvent être amenés chacun séparément dans l'enceinte par des passages distincts.

Les parties terminales 2B et 2C comportent par ailleurs chacune une ouverture 21B et 21C. Ces ouvertures sont disposées le long d'un axe X traversant l'enceinte de part en part, et communiquent à l'intérieur des parties terminales 2B et 2C avec des tubes cylindriques 22B et 22C débouchant dans la partie centrale 2A et mettant en relation le milieu intérieur à l'enceinte avec le milieu extérieur. Elles permettent à un corps tel qu'une fibre optique F par exemple de traverser l'enceinte en défilant selon l'axe X, appelé pour cette raison axe de passage. Chacune des parties terminales 2B et 2C est en outre munie d'un passage d'amenée 23B et 23C d'un gaz neutre dans les conditions de plasma, comme par exemple l'Argon. Ce gaz, introduit en surpression par rapport au gaz réactif plasmagène, permet de confiner ce dernier à l'intérieur du réacteur 1. A cet effet, les tubes 22B et 22C sont percés, à l'intérieur des parties terminales 2B et 2C, d'ouvertures respectives 24B et 24C permettant au gaz en surpression de pénétrer à l'intérieur de la partie centrale 2A.

La contre-électrode 3 est formée d'un grillage cylindrique d'axe X et de diamètre extérieur compris par exemple entre 4 et 10 mm. Elle occupe toute la hauteur de la partie centrale 2A et est maintenue dans celle-ci au moyen deux supports 25B et 25C venant en prolongement des tubes 22B et 22C à l'intérieur de la partie centrale 2A.

L'électrode haute tension 4, en acier inoxydable par exemple, est portée à une haute tension continue positive ou négative comprise entre 3 et 30 kV (en valeur absolue). Elle peut également être portée à une tension alternative d'amplitude comprise entre 3 et 30 kV. Elle est réalisée d'une part de manière à respecter les conditions nécessaires à l'apparition de l'effet couronne, et d'autre part, afin de traiter dans son ensemble la surface extérieure de la fibre F. Pour répondre aux exigences de production d'une décharge couronne, il est préférable, de manière bien connue, que la surface interne de l'électrode haute tension 4 (en regard de l'axe X) comporte des portions de faible rayon de courbure, pointues ou effilées par exemple. A cet effet, le rapport entre le rayon de courbure de la contre-électrode 3 et celui des portions pointues ou effilées de l'électrode haute tension 4 est au moins de l'ordre de quelques dizaines.

Afin de traiter l'ensemble de la surface extérieure de la fibre F, l'électrode haute tension 4 est constituée d'un empilement, occupant en partie ou totalement la hauteur de la partie centrale 2A, de tores métalliques 41 d'axe X (on entend ici par tore un anneau de section transversale quelconque), extérieurement coaxiaux à la contre-électrode 3. La section de chaque tore 41 est pentagonale et possède un angle aigu α de l'ordre de 20° orienté vers l'axe X ; le rayon de courbure de la partie effilée de l'électrode haute tension 4 est ainsi environ égal à 0,02 mm. Le diamètre intérieur de l'électrode haute tension 4, délimité par l'extrémité intérieure des tores 41, est compris entre 8 et 20 mm.

Afin de maintenir l'empilement de tores 41 centré dans la partie centrale 2A et de le relier à un générateur de tension, on utilise un cylindre de maintien 23A conducteur et creux d'axe X, lui-même retenu à l'intérieur de l'enceinte 2 par un anneau de centrage 24A en polytétrafluoroéthylène (PTFE) par exemple, et solidaire de la partie centrale 2A. Les tores 41 sont ainsi introduits dans le cylindre 23A qui comporte, pour les empêcher de se déplacer le long de l'axe X, un fond horizontal 25A. Le cylindre 23A est connecté au générateur de tension. Le centrage de l'électrode haute tension 4, et surtout le maintien précis de sa coaxialité avec la contre-électrode 3, sont préférables pour éviter les phénomènes dits de décharges préférentielles, qui provoquent la création d'arcs électriques aux endroits où la distance inter-électrodes diminue. Il est donc souhaitable de veiller à ce que, de manière générale, la distance inter-électodes reste constante. Pour cette même raison, il est préférable que le grillage constituant la contre-électrode ne soit pas fait d'un tressage de fils métalliques, mais plutôt d'un film métallique perforé. En effet, dans un tressage, certains points sont plus éloignés que d'autres de l'électrode haute tension.

Grâce au dispositif représenté aux figures 1 et 2, si la substance active contenue dans le gaz réactif plasmagène introduit et destinée à traiter la surface de la fibre F est constituée d'espèces électriquement neutres, les espèces actives ionisées provenant de l'ionisation du gaz plasmagène sont piègées dans la grille 3, qui laisse passer les espèces actives neutres.

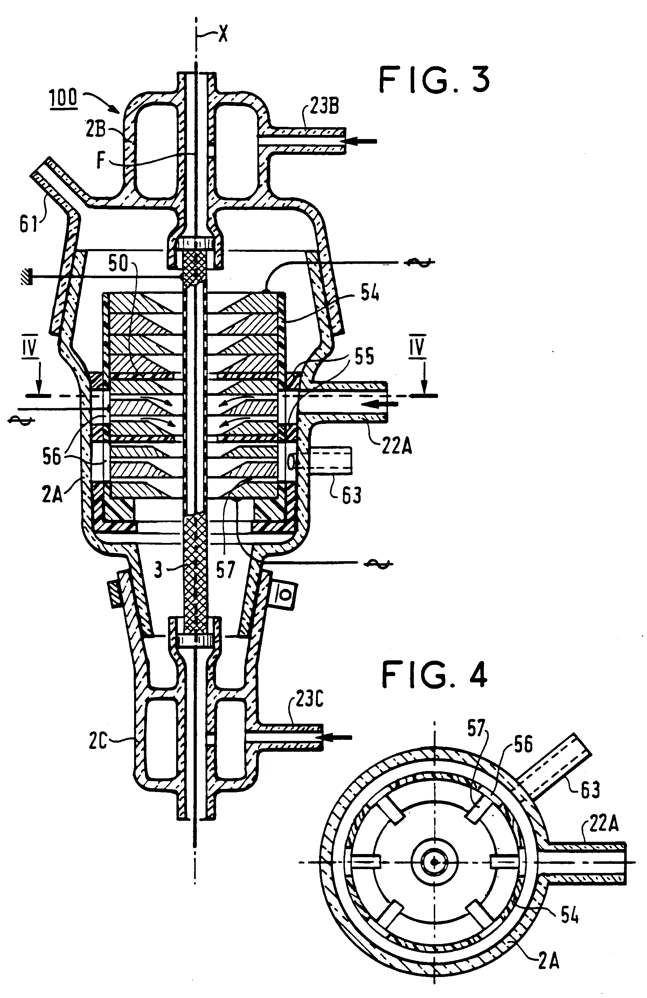

On a représenté aux figures 3 et 4 un deuxième dispositif selon l'invention. Dans ces figures, les éléments communs avec les figures précédentes portent les mêmes numéros de référence. Le dispositif représenté est référencé 100. Ce dispositif est semblable au dispositif des figures 1 et 2 à l'exception faite de l'électrode haute tension 400. Ici, l'électrode 400 est encore constituée d'un empilement de tores 41. A la différence du dispositif représenté aux figures 1 et 2, deux rondelles isolantes 50 en alumine par exemple séparent l'empilement en trois groupes de tores 41, formant trois compartiments. A chacun de ces compartiments est associé un passage d'amenée distinct de gaz réactif plasmagène 61, 22A et 63. En outre, au niveau de chaque rondelle 50 et à l'extérieur du cylindre de maintien 54, en alumine, de l'électrode 400 se trouvent deux anneaux 55 isolants de séparation de l'alimentation en gaz réactifs des compartiments. Les anneaux 55 délimitent ainsi des portions d'enceinte isolées les unes des autres de sorte qu'il n'y ait pas de mélange entre les divers gaz réactifs amenés par les passages 61, 22A et 63, surtout lorsque ces gaz sont de compositions différentes.

Afin d'introduire ces gaz entre l'électrode 400 et la contre-électrode 3, des ouvertures 56 (voir figure 4) sont ménagées dans le cylindre de maintien 54. Ces ouvertures 56 communiquent avec des passages 57 pratiqués à cet effet entre les électrodes 41 de l'empilement. En ce qui concerne le compartiment supérieur, qui se trouve au-dessus des deux autres, le gaz arrivant par le passage 61 y pénètre directement. En effet, ce compartiment est ouvert vers la partie 2B de l'enceinte 2. Toutefois, dans d'autres modes de réalisation, il est bien évidemment possible d'appliquer au compartiment supérieur les mêmes dispositions qu'aux autres compartiments.

Enfin, les tores 41 de chacun des compartiments sont portés à des potentiels distincts permettant le traitement à l'aide du gaz en relation avec le compartiment correspondant. Les rondelles isolantes 50 sont prévues pour isoler électriquement les différents compartiments les uns des autres.

Grâce au dispositif 100, il est donc possible de faire subir à la fibre F qui défile le long de l'axe X différents traitements successifs. Par exemple, lorsqu'un gaz réactif oxydant est introduit par le passage 61 et un gaz réactif fluorocarboné introduit par les passages 22A et 63, les compartiments étant portés aux potentiels adéquats, la surface de la fibre F est tout d'abord décapée immédiatement après son entrée dans le réacteur, avant d'être traitée pour être rendue hydrophobe et antiadhérente. Ainsi, les molécules fluorées se greffent mieux sur la surface de la fibre F.

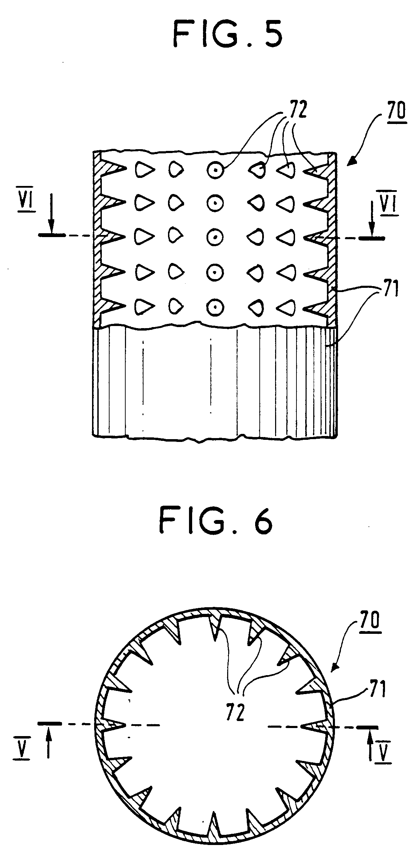

On a représenté aux figures 5 et 6 une autre forme d'électrode haute tension possible permettant d'obtenir le rapport de rayons de courbure souhaité pour pouvoir effectuer la décharge couronne. Cette électrode 70 comporte une paroi métallique cylindrique 71 jouant le rôle du cylindre de maintien des figures précédentes et hérissée d'une pluralité de pointes radiales 72 sur toute sa surface intérieure en regard de l'axe X. On dit que cette électrode a une forme de "collier de chien".

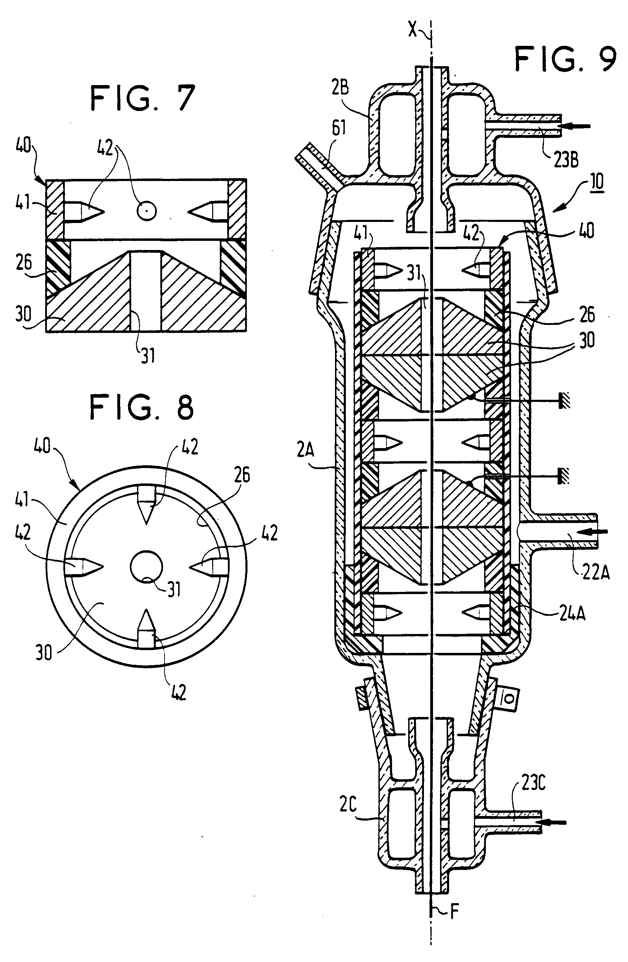

Enfin, on a représenté aux figures 7 à 9 un troisième dispositif selon l'invention. Dans ces figures, les éléments communs avec les figures précédentes portent les mêmes numéros de référence. Le dispositif représenté est référencé 10. Ce dispositif est semblable au dispositif des figures 1 et 2 à l'exception faite de la contre-électrode 30 et de l'électrode 40. Ici, la contre-électrode 30 est constituée d'une portion métallique en forme de tronc de cône d'axe X. Cette portion en tronc de cône 30 est percée dans sa partie centrale le long de l'axe X d'un canal cylindrique 31 pour le passage de la fibre F. L'électrode haute tension 40 est constituée d'une paroi métallique cylindrique 41 hérissée de quatre pointes radiales 42 disposées à 90° l'une de l'autre (voir figure 8) sur sa surface intérieure en regard de l'axe X. Les pointes 42 sont à base cylindrique, et coniques à leur extrémité. Afin d'isoler électriquement l'électrode 40 de la contre-électrode 30, une entretoise isolante 26 cylindrique et tubulaire d'axe X est disposée entre ces dernières à l'intérieur de l'enceinte. Un tel dispositif permet d'effectuer le traitement de la surface de la fibre F à la fois à l'aide d'espèces actives neutres et chargées, lorsque cela est nécessaire. En effet, lorsque la fibre F défile le long de l'axe X, elle est "bombardée" de part et d'autre par des espèces actives ionisées non interceptées par la contre-électrode 30, et par des espèces actives neutres.

Le cylindre 41 a une hauteur le long de l'axe X de 10 mm et un diamètre de 34 mm, l'entretoise 26 une hauteur de 7 mm et le contre-électrode 30 une hauteur de 13,5 mm. Le diamètre du canal 31 est de 5 mm. Le diamètre de la base cylindrique des pointes 42 est de 3 mm et la hauteur de leur extrémité conique de 8 mm.

Plusieurs ensembles tels que celui constitué par l'électrode 40, la contre-électrode 30 et l'entretoise isolante 26 sont empilés dans l'enceinte du dispositif 10, afin de réaliser des compartiments séparés à l'intérieur desquels on effectue des traitements distincts, comme dans la variante illustrée aux figures 3 et 4. On peut bien entendu n'utiliser qu'un seul ensemble tel que celui représenté en figure 7.

D'autre part, seules quatre pointes radiales constituent l'électrode haute tension 40 dans l'exemple illustré aux figures 7 à 9, mais il est bien évident que cette électrode peut comporter plus ou moins de quatre pointes radiales situées dans un même plan sans sortir du cadre de l'invention.

Deux expériences ont été effectuées à l'aide d'un dispositif comportant un seul ensemble tel que celui de la figure 7.

Dans une première expérience, on a procédé au traitement dans l'air, c'est-à-dire sous atmosphère oxydante, d'une fibre F1 de 25 mm de longueur maintenue immobile dans l'enceinte le long de l'axe X, la distance entre l'extrémité des pointes 42 et la fibre F étant de 7 mm. L'électrode 40 a été portée à un potentiel continu de 10kV et l'intensité du courant était de 75 à 80 »A. Après une durée de traitement de 2h30, on a mesuré l'angle d'avance dans l'eau de l'échantillon traité, dont la valeur est de 29,4°. On rappelle que l'angle d'avance caractérise l'adhérence de l'échantillon : plus l'angle d'avance est faible, plus l'adhérence est importante. L'angle d'avance dans l'eau de la fibre F1 non traitée est de 70° environ.

Le traitement permet donc d'obtenir les propriétés recherchées en termes d'adhérence, et il est en outre homogène sur toute la surface extérieure de la fibre F1.

Dans une deuxième expérience, on a procédé au traitement de la fibre F toujours immobile dans l'enceinte, et à même distance des pointes 42, dans une atmosphère de difluoroéthylène, pour effectuer la fluoration de la gaine extérieure de la fibre F. Le potentiel de traitement était de 11 à 12 kV, continu, et l'intensité du courant d'environ 50 à 60 »A. L'angle d'avance dans l'eau de la fibre F ainsi traitée est de 95°, ce qui montre que le traitement permet d'obtenir les propriétés d'anti-adhérence recherchées. Il est également homogène sur toute la surface extérieure de la fibre F.

Grâce aux dispositifs selon l'invention, l'ensemble de la surface externe d'un corps de révolution est donc traité de manière uniforme.

De plus, pour une fibre optique par exemple, le traitement peut être effectué en ligne, après la phase de gainage de la fibre et avant que cette dernière se dirige vers le cabestan de stockage. L'introduction de l'opération de traitement de surface de la gaine extérieure permet donc de respecter la vitesse de fibrage, de gainage et de tirage (comprise par exemple entre 10 et 1000 mètres par minute), et donc de ne pas ralentir le processus de production, grâce à l'introduction de gaz en surpression permettant de confiner le gaz réactif dans l'enceinte alors que celle-ci est ouverte sur le milieu extérieur à la pression atmosphérique.

Si la vitesse de fabrication est trop rapide pour permettre le greffage des espèces actives de la décharge couronne à la surface du corps à traiter, il suffit d'augmenter la hauteur de la zone où se produit l'effet couronne, par exemple en disposant plusieurs réacteurs identiques les uns à la suite des autres.

Bien évidemment, la présente invention dans le cadre des revendications n'est pas limitée aux modes de réalisation qui viennent d'être décrits.

Les structures décrites pour les électrodes des dispositifs précédents ne constituent que des exemples d'application non limitatifs. En effet, la structure de l'électrode haute tension peut être quelconque du moment qu'elle répond aux exigences suivantes :
- présence d'une surface de rayon de courbure faible devant celui de la contre-électrode et disposée en regard de la surface du corps à traiter ;
- traitement homogène de la surface à traiter.

Pour satisfaire la dernière exigence, si le corps à traiter reste au repos par rapport à l'électrode haute tension, c'est-à-dire si sa vitesse de défilement est nulle, il suffit que cette électrode entoure le corps à traiter. Ainsi, toute la surface de ce corps se trouve en regard de la surface de faible rayon de courbure de l'électrode haute tension. Les dispositifs décrits précédemment peuvent être utilisés dans ce type d'application. Bien entendu, ces dispositifs ou des équivalents de ces dispositifs peuvent également traiter des corps défilant dans l'enceinte le long de l'axe X.

Dans ce dernier cas, toutefois, il suffit simplement que, lorsque l'on effectue la projection des extrémités des portions effilées ou pointues de l'électrode haute tension sur un plan orthogonal à l'axe de passage du corps et que l'on relie les projections ainsi obtenues, on obtienne une courbe fermée entourant la projection du contour externe du corps à traiter sur ce même plan : ainsi, lorsque le corps défile en regard de l'électrode haute tension, toute sa surface se trouve en regard, par portions successives, des portions de faible rayon de courbure de l'électrode haute tension. Le traitement est donc uniforme sur l'ensemble de la surface.

D'autre part, lorsque l'électrode haute tension comprend plusieurs compartiments séparés par un isolant et en relation avec des amenées de gaz réactifs de composition distinctes, il est nécessaire que le critère de projection précédent s'applique à la restriction à chaque compartiment de l'électrode haute tension (on entend ici par restriction de l'électrode haute tension la portion de cette dernière délimitée par deux plans orthogonaux à l'axe de défilement et délimitant un des compartiments) sur un plan orthogonal à l'axe de défilement du corps. Cette condition doit en effet être respectée si l'on désire traiter de manière uniforme la surface du corps à l'aide de chaque réactif. Les dispositifs des figures 3, 4 et 9 correspondent à cette application.

Le dispositif selon l'invention peut servir à effectuer n'importe quel traitement par décharge couronne (décapage, nettoyage, coloration, deshydratation, fluoration,...).

Il peut être utilisé par exemple pour la fluoration des gaines externes de fibres optiques, à l'aide d'un gaz réactif plasmagène à base de Fluor, ou bien pour tout autre traitement relatif aux fibres.

Il peut également servir au traitement de câbles électriques ou optiques gainés. Le gaz plasmagène réactif peut être fluorocarboné, oxydant, réducteur ou encore constitué à base d'un gaz rare, selon le traitement souhaité.

Plus généralement, tout corps allongé le long d'un axe longitudinal, au repos ou en mouvement, peut être traité à l'aide du dispositif selon l'invention. Il suffit pour cela d'adapter les dimensions des électrodes, la distance inter-électrodes, les matériaux qui les constituent, la distance entre le corps à traiter et l'électrode haute tension, ainsi que les conditions de traitement au matériau à traiter et au résultat recherché.

## Revendications

1. Dispositif de traitement de la surface d'un corps par décharge couronne comprenant :
- une enceinte de réaction fermée dans laquelle peut défiler ledit corps à traiter le long d'un axe dit de passage,
- une électrode portée à un potentiel dit de traitement,
- une contre-électrode portée à un potentiel inférieur en valeur absolue à celui de ladite électrode, ladite contre-électrode entourant ledit axe de passage et lesdites électrode et contre-électrode étant disposées de manière à définir au voisinage dudit axe de passage une zone dite plasmagène dans laquelle se produit ladite décharge couronne,
- au moins un passage ménagé dans ladite enceinte pour l'amenée d'un gaz réactif plasmagène destiné au traitement,
caractérisé en ce que ladite électrode (4) est munie d'une pluralité de portions de faible rayon de courbure, c'est-à-dire ayant des extrémités effilées ou pointues, orientées vers ledit axe de passage (X) et disposées de sorte que les projections de leurs extrémités de faible rayon de courbure sur un plan orthogonal audit ce de passage (X) entourent la projection sur ledit plan du contour externe dudit corps à traiter (F) ainsi que celle dudit ce de passage (X).

2. Dispositif selon la revendication 1, caractérisé en ce que ladite électrode (4) est constituée d'un empilement d'une pluralité de tores (41) en un matériau conducteur, chacun desdits tores (41) ayant une section présentant un angle aigu orienté vers ledit axe (X).

3. Dispositif selon la revendication 1, caractérisé en ce que ladite électrode (4) est constituée d'une paroi métallique de révolution (71) autour dudit ce de passage (X) et hérissée sur toute sa surface interne en regard dudit ce (X) de pointes (72) orientées vers ledit axe (X).

4. Dispositif selon la revendication 3, caractérisé en ce que ladite paroi (41) est hérissée d'une pluralité de pointes (42) situées dans un même plan orthogonal audit axe de passage (X).

5. Dispositif selon la revendication 4, caractérisé en ce que ladite paroi (41) est hérisée de quatre pointes (42) situées dans un même plan orthogonal audit axe de passage (X) et disposées à 90° l'une de l'autre dans ce plan.

6. Dispositif selon l'une des revendications 2 à 5, caractérisé en ce que ladite contre-électrode (3) est constituée d'un grillage cylindrique interposé entre ladite électrode (4) et ledit axe de passage (X) et relié à la masse.

7. Dispositif selon la revendication 6, caractérisé en ce que ledit grillage cylindrique est constitué d'un film métallique perforé.

8. Dispositif selon l'une des revendications 4 ou 5, caractérisé en ce que ladite contre-électrode présente un canal central centré sur ledit axe de passage et est disposée à la suite de ladite électrode le long dudit axe de passage en étant isolée électriquement de ladite électrode par une entretoise isolante présentant également un canal central centré sur ledit axe de passage.

9. Dispositif selon l'une des revendications 1 à 8, caractérisé en ce que ladite électrode (4) est constituée d'une pluralité de compartiments, empilés le long dudit axe de passage (X), délimités les uns des autres par des plans orthogonaux audit axe de passage (X) et tels que les projections sur un plan orthogonal audit axe (X) des extrémités de faible rayon de courbure desdites portions effilées ou pointues appartenant à un même compartiment entourent la projection sur ledit plan dudit contour externe dudit corps à traiter ainsi que celle dudit axe de passage (X).

10. Dispositif selon la revendication 9, caractérisé en ce que ladite enceinte (2A,2B, 2C) comporte plusieurs passages (61, 22A, 63) d'amenée de réactifs, chacun desdits passages (61, 22A, 63) étant en relation avec l'un distinct desdits compartiments et amenant un gaz réactif plasmagène de composition distincte, des moyens de séparation (55) étant prévus dans ladite enceinte (2A, 2B, 2C) pour empêcher le mélange desdits gaz de compositions distinctes.

11. Dispositif selon l'une des revendications 9 ou 10, caractérisé en ce que chacun desdits compartiments est séparé des autres par un moyen isolant (50) et porté à un potentiel différent.

12. Dispositif selon l'une des revendications 9 à 11, caractérisé en ce que ladite électrode (4) est constituée de deux compartiments séparés l'un de l'autre par une rondelle isolante (50), le premier desdits compartiments rencontré par ledit corps (F) lors de son défilement dans ladite enceinte (2A, 2B,2C) étant en relation avec une amenée (61) de gaz réactif plasmagène décapant ladite surface dudit corps, et le second compartiment étant en relation avec une amenée (22A, 63) de gaz réactif plasmagène traitant ladite surface dudit corps.

13. Dispositif selon l'une des revendications 1 à 12, caractérisé en ce que ladite enceinte (2A, 2B, 2C) présente une ouverture dite d'entrée (21B) et une ouverture dite de sortie (21C), lesdites ouvertures étant en relation avec le milieu extérieur à ladite enceinte (2A, 2B, 2C) et permettant la traversée de ladite enceinte par ledit corps (F).

14. Dispositif selon la revendication 13, caractérisé en ce que, au voisinage desdites ouvertures d'entrée ( 21B) et de sortie (21C) se trouve un passage d'amenée (23B, 23C) de gaz neutre vis-à-vis de la décharge couronne audit potentiel de traitement, en surpression par rapport audit gaz réactif à l'intérieur de ladite enceinte.

15. Dispositif selon l'une des revendications 1 à 14, caractérisé en ce que la distance inter-électrodes est constante.

16. Dispositif selon l'une des revendications 1 à 15, caractérisé en ce que la vitesse de défilement dudit corps dans ladite enceinte est nulle.

17. Application du dispositif selon l'une des revendications 1 à 16, caractérisée en ce qu'elle est destinée à la fluoration des gaines de fibres optiques en présence d'un gaz plasmagène fluorocarboné.

18. Application du dispositif selon l'une des revendications 1 à 16, caractérisé en ce qu'elle est destinée au traitement de la surface extérieure d'un câble gainé.

## Claims

1. Apparatus for treating the surface of a body by corona discharge, the apparatus comprising:
a reaction enclosure through which said body to be treated can run along a "through" axis;
an electrode raised to a "treatment" potential;
a counter-electrode raised to a potential that is lower in absolute value than the potential of said electrode, said counter-electrode surrounding said through axis and said electrode and said counter-electrode together being disposed so as to define a "plasma-generating" zone in the vicinity of said through axis and in which said corona discharge takes place; and
at least one passage formed in said enclosure to feed a plasma-generating reagent gas for treatment purposes;
the apparatus being characterized in that said electrode (4) is provided with a plurality of portions having small radius of curvature, i.e. having ends that are tapering or pointed, said portions pointing towards said through axis (X), and being disposed in such a manner that, when projected onto a plane orthogonal to said through axis (X), their small-radius-of-curvature ends surround the projection onto said plane both of said through axis (X) and of the outline of said body to be treated (F).

2. Apparatus according to claim 1, characterized in that said electrode (4) is constituted by a stack of rings (41) of conductive material, each of said rings (41) having a section with an acute angle pointing towards said axis (X).

3. Apparatus according to claim 1, characterized in that said electrode (4) is constituted by a metal wall (71) that is circularly symmetrical around the axis of said passage (X) and that is covered over its entire inside surface facing said axis (X) with spikes (72) pointing towards said axis (X).

4. Apparatus according to claim 3, characterized in that said wall (41) is covered in a plurality of spikes (42) that are situated in a common plane orthogonal to said through axis (X).

5. Apparatus according to claim 4, characterized in that said wall (41) is covered with four spikes (42) situated in a common plane orthogonal to said through axis (X) and disposed at 90° relative to one another in said plane.

6. Apparatus according to any one of claims 2 to 5, characterized in that said counter-electrode (3) is constituted by a cylindrical grid interposed between said electrode (4) and said through axis (X) and connected to ground.

7. Apparatus according to claim 6, characterized in that said cylindrical grid is constituted by a perforated metal foil.

8. Apparatus according to claim 4 or 5, characterized in that said counter-electrode has a central channel centered on said through axis and is disposed after said electrode along said through axis, being electrically insulated from said electrode by an insulating spacer that also has a central channel centered on the said through axis.

9. Apparatus according to any one of claims 1 to 8, characterized in that said electrode (4) is constituted by a plurality of compartments that are stacked along said through axis (X) and that are separated from one another by planes orthogonal to said through axis (X), the small-radius-of-curvature ends of said tapering or pointed portions belonging to each compartment being such that when projected onto a plane orthogonal to said axis (X), they surround the projection onto said plane both of said through axis (X) and of said outline of said body to be treated.

10. Apparatus according to claim 9, characterized in that said enclosure (2A, 2B, 2C) includes a plurality of reagent feed passages (61, 22A, 63), with each of said passages (61, 22A, 63) being in communication with a distinct one of said compartments and feeding a plasma-generating reagent gas of a distinct composition thereto, separation means (55) being provided in said enclosure (2A, 2B, 2C) to prevent said gases of distinct compositions mixing.

11. Apparatus according to claim 9 or 10, characterized in that each of said compartments is separated from the others by insulating means (50) and is raised to a different potential.

12. Apparatus according to any one of claims 9 to 11, characterized in that said electrode (4) is constituted by two compartments that are separated from each other by an insulating washer (50), the first of said compartments to be encountered by said body (F) as it runs through said enclosure (2A, 2B, 2C) being in communication with a feed (61) for a plasma-generating reagent gas that cleans said surface of said body, and the second compartment being in communication with a feed (22A, 63) for a plasma-generating reagent gas that treats said surface of said body.

13. Apparatus according to any one of claims 1 to 12, characterized in that said enclosure (2A, 2B, 2C) has an inlet opening (21B) and an outlet opening (21C), said openings being in communication with the medium outside said enclosure (2A, 2B, 2C) and enabling said body (F) to pass through said enclosure.

14. Apparatus according to claim 13, characterized in that in the vicinity of said inlet and outlet openings (21B, 21C) there area respective passages (23B, 23C) for feeding a gas that is inert relative to the corona discharge at said treatment potential, which gas is delivered at a pressure higher than the pressure of said reagent gas inside said enclosure.

15. Apparatus according to any one of claims 1 to 14, characterized in that the inter-electrode distance is constant.

16. Apparatus according to any one of claims 1 to 15, characterized in that the running speed of said body through said enclosure is zero.

17. An application of the apparatus according to any one of claims 1 to 16, characterized in that it is intended for fluorinating the coverings of optical fibers in the presence of a fluorocarbon plasma-generating gas.

18. An application of the apparatus according to any one of claims 1 to 16, characterized in that it is intended for performing outside surface treatment on a sheathed cable.

## Patentansprüche

1. Vorrichtung zur Behandlung der Oberfläche eines Körpers durch Koronaentladung,
- mit einem geschlossenen Reaktionsgefäß, durch das der zu behandelnde Körper entlang einer Durchführungsachse verlaufen kann,
- mit einer auf ein Behandlungspotential gebrachten Elektrode,
- mit einer im Vergleich zur ersten Elektrode auf ein absolut gesehen geringeres Potential gebrachten Gegenelektrode, wobei die Gegenelektrode die Durchführungsachse umgibt und die Elektrode und die Gegenelektrode so angeordnet sind, daß sie in der Nähe der Durchführungsachse eine Plasmazone definieren, in der sich die Koronaentladung entwickelt,
- mit mindestens einem Einlaß in das Gefäß für ein plasmaerzeugendes Reaktionsgas für die Behandlung,
dadurch gekennzeichnet, daß die Elektrode (4) zahlreiche Bereiche mit kleinem Krümmungsradius, also mit scharfkantigen oder spitzen Enden besitzt, die zur Durchführungsachse (X) ausgerichtet sind und so angeordnet sind, daß die Projektionen ihrer Enden mit geringem Krümmungsradius in eine Ebene senkrecht zur Durchführungsachse (X) die Projektion des Außenumrisses des zu behandelnden Körpers (F) sowie die der Durchführungsachse (X) auf diese Ebene umschließen.

2. Vorrichtung nach Anspruch 1, dadurch gekennzeichnet, daß die Elektrode (4) von einem Stapel mehrerer Ringe (41) aus einem leitenden Material gebildet wird, wobei jeder Ring (41) im Querschnitt einen spitzen Winkel aufweist, der zur Achse (X) ausgerichtet ist.

3. Vorrichtung nach Anspruch 1, dadurch gekennzeichnet, daß die Elektrode (4) aus einer zur Durchführungsachse (X) drehsymmetrischen Metallwand (71) gebildet wird, die auf ihrer ganzen Innenoberfläche gegenüber der Achse (X) Spitzen (72) aufweist, die zur Achse (X) hin ausgerichtet sind.

4. Vorrichtung nach Anspruch 3, dadurch gekennzeichnet, daß die Wand (41) eine Vielzahl von Spitzen (42) aufweist, die in einer gemeinsamen Ebene senkrecht zur Durchführungsachse (X) liegen.

5. Vorrichtung nach Anspruch 4, dadurch gekennzeichnet, daß die Wand (41) vier Spitzen (42) aufweist, die in einer gemeinsamen Ebene senkrecht zur Durchführungsachse (X) und in einem gegenseitigen Winkelabstand von 90° in dieser Ebene angeordnet sind.

6. Vorrichtung nach einem der Ansprüche 2 bis 5, dadurch gekennzeichnet, daß die Gegenelektrode (3) ein zylindrisches Gitter bildet, das zwischen die Elektrode (4) und die Durchführungsachse (X) eingefügt ist und an Masse liegt.

7. Vorrichtung nach Anspruch 6, dadurch gekennzeichnet, daß das zylindrische Gitter aus einer perforierten Metallfolie besteht.

8. Vorrichtung nach einem der Ansprüche 4 oder 5, dadurch gekennzeichnet, daß die Gegenelektrode einen zentralen, auf die Durchführungsachse zentrierten Kanal besitzt und hinter der Elektrode in Längsrichtung der Durchführungsachse liegt, wobei sie elektrisch gegen die Elektrode durch einen isolierenden Zwischenring isoliert ist, der ebenfalls einen auf die Durchführungsachse zentrierten zentralen Kanal besitzt.

9. Vorrichtung nach einem der Ansprüche 1 bis 8, dadurch gekennzeichnet, daß die Elektrode (4) mehrere Abteile enthält, die entlang der Durchführungsachse (X) gestapelt sind und gegeneinander durch zur Durchführungsachse (X) senkrechte Ebenen derart begrenzt sind, daß die Projektionen der Enden mit geringem Krümmungsradius der scharfkantigen oder spitzen Bereiche in einem Abteil bezogen auf eine zur Achse (X) senkrechten Ebene die Projektion des Außenumrisses des zu behandelnden Körpers sowie die der Durchführungsachse (X) auf diese Ebene umschließen.

10. Vorrichtung nach Anspruch 9, dadurch gekennzeichnet, daß das Gefäß (2A, 2B, 2C) mehrere Einlässe (61, 22A, 63) für ein Reaktionsgas besitzt, die mit je einem bestimmten der Abteile in Relation stehen und durch die ein plasmaerzeugendes Reaktionsgas einer bestimmten Zusammensetzung geliefert wird, wobei Trennmittel (55) im Gefäß (2A, 2B, 2C) vorgesehen sind, um die Mischung der Gase unterschiedlicher Zusammensetzung zu verhindern.

11. Vorrichtung nach einem der Ansprüche 9 oder 10, dadurch gekennzeichnet, daß jedes Abteil gegen die anderen durch ein isolierendes Mittel (50) getrennt ist und auf ein anderes Potential gebracht ist.

12. Vorrichtung nach einem der Ansprüche 9 bis 11, dadurch gekennzeichnet, daß die Elektrode (4) aus zwei gegenseitig durch eine Isolierscheibe (50) getrennten Abteilen besteht, wobei das vom Körper (F) während seines Durchlaufs durch das Gefäß (2A, 2B, 2C) als erstes durchlaufene Abteil mit einem Einlaß (61) für ein die Oberfläche des Körpers anätzendes plasmaerzeugendes Reaktionsgas in Verbindung steht, während das zweite Abteil mit einem Einlaß (22A, 63) für ein plasmaerzeugendes Reaktionsgas in Verbindung steht, das die Oberfläche des Körpers behandelt.

13. Vorrichtung nach einem der Ansprüche 1 bis 12, dadurch gekennzeichnet, daß das Gefäß (2A, 2B, 2C) eine Eingangsöffnung (21B) und eine Ausgangsöffnung (21C) besitzt, die mit der Außenumgebung des Gefäßes (2A, 2B, 2C) in Verbindung stehen und die Durchführung des Körpers (F) durch das Gefäß erlauben.

14. Vorrichtung nach Anspruch 13, dadurch gekennzeichnet, daß in der Nähe der Eingangs- und Ausgangsöffnungen (21B, 21C) ein Einlaß (23B, 23C) für ein gegenüber der Koronaentladung bei dem Behandlungspotential neutrales Gas vorgesehen ist, wobei dieses neutrale Gas bezüglich des Reaktionsgases im Inneren des Gefäßes einen Überdruck aufweist.

15. Vorrichtung nach einem der Ansprüche 1 bis 14, dadurch gekennzeichnet, daß der Abstand zwischen den Elektroden konstant ist.

16. Vorrichtung nach einem der Ansprüche 1 bis 15, dadurch gekennzeichnet, daß die Durchlaufgeschwindigkeit des Körpers durch das Gefäß Null ist.

17. Anwendung der Vorrichtung nach einem der Ansprüche 1 bis 16, dadurch gekennzeichnet, daß die Vorrichtung zur Fluorierung der Hüllen von Lichtleitfasern in Gegenwart eines plasmaerzeugenden Fluorkohlenstoffgases bestimmt ist.

18. Anwendung der Vorrichtung nach einem der Ansprüche 1 bis 16, dadurch gekennzeichnet, daß sie für die Behandlung der Außenoberfläche eines umhüllten Kabels bestimmt ist.
